# EUROPÄISCHE PATENTANMELDUNG

(11) **EP 1 116 621 A1**
(43) Veröffentlichungstag der Anmeldung: **18.07.2001**
(21) Anmeldenummer: 00100551.1
(22) Anmeldetag: 12.01.2000
(51) Int. Cl.: B60K 13/04

(54) **Elastisches Pendellager, insbesondere zur Aufh-ngung einer Abgasanlage an einem Fahrzeugboden**

(71) Anmelder: WEGU Gummi- und Kunststoffwerke GmbH & Co. KG, D-34123 Kassel (DE)
(72) Erfinder: Zimmermann, Horst, 34260 Kaufungen (DE); Krause, Ralf, 34308 Bad Emstal (DE); Zernick, Alfred, 34346 Hann.-Münden (DE)
(74) Vertreter: Patentanwälte Rehberg + Hüppe

(57) **Zusammenfassung**

Ein elastisches Pendellager (1), insbesondere zur Aufhängung einer Abgasanlage an einem Fahrzeugboden, weist eine Schwenklagerbuchse (2) für ein abstützendes Befestigungselement sowie eine Schwenklagerbuchse (3) für ein abzustützendes Befestigungselement und eine schlaufenförmigen Verliersicherung (4) auf, die aus einem elastischen Federstahlband (7) ausgebildet ist. Dabei ist die Schwenklagerbuchse (2) für das abstützende Befestigungselement am oberen Rand der Verliersicherung (4) angeordnet, und die Schwenklagerbuchse (3) für das abzustützende Befestigungselement ist innerhalb der Verliersicherung (4) und mit Abstand zu deren unteren Rand angeordnet und wird von einer Federanordnung (5) aus Elastomerwerkstoff (11) abgestützt, während die Federanordnung (5) aus Elastomerwerkstoff (11) dauerhaft mit dem Federstahlband (7) verbunden ist.

## Beschreibung

Die Erfindung bezieht sich auf ein elastisches Pendellager, insbesondere zur Aufhängung einer Abgasanlage an einem Fahrzeugboden, mit einer Schwenklagerbuchse für ein abstützendes Befestigungselement sowie einer Schwenklagerbuchse für ein abzustützendes Befestigungselement und mit einer schlaufenförmigen Verliersicherung, die elastisch ausgebildet ist, wobei die Schwenklagerbuchse für das abstützende Befestigungselement am oberen Rand der Verliersicherung angeordnet ist und wobei die Schwenklagerbuchse für das abzustützende Befestigungselement innerhalb der Verliersicherung und mit Abstand zu deren unteren Rand angeordnet ist und von einer Federanordnung aus Elastomerwerkstoff abgestützt wird.

Elastische Lager zur Aufhängung von Abgasanlagen an einem Fahrzeugboden müssen einer Vielzahl von Anforderungen genügen. Sie sollen in vertikaler Richtung, d. h. in der Abstützungsrichtung, möglichst weich sein, um eine Schwingungsübertragung von der Abgasanlage auf den Fahrzeugboden möglichst weitgehend zu verhindern. Sie sollen gleichzeitig aber auch in horizontaler Richtung, d. h. in der Haupterstreckungsrichtung der Abgasanlage in der Lage sein, thermische Ausdehnungen der Abgasanlage, axiale Verschiebungen der Abgasanlage aufgrund von Motorbewegungen und auftretende Toleranzen bei der Länge der Abgasanlagen zu überbrücken. Gleichzeitig soll eine horizontale Verschiebung zwischen der Abgasanlage und dem Fahrzeugboden aber die schwingungsdämmenden Eigenschaften der elastischen Lager nicht verschlechtern. Hinzu kommen hohe thermische Anforderungen an die elastischen Lager durch die erhöhte Temperatur der Abgasanlage und Umwelteinflüsse durch die exponierte Lage der elastischen Lager am Fahrzeugboden, die einer hohen Lebensdauer grundsätzlich entgegen wirken. Selbst wenn eine hohe Lebensdauer der elastischen Lager erreicht wird, muß zusätzlich eine Sicherheitseinrichtung vorhanden sein, damit beim Ausfall des elastischen Lagers die Abgasanlage nicht herabfällt. Alle diese Anforderungen sind zudem von dem Hintergrund eines hohen Kostendrucks zu sehen. Das heißt, die elastischen Lager sollen auch noch einen möglichst niedrigen Preis aufweisen.

Ein bekannter Typ von elastischen Lagern zur Aufhängung einer Abgasanlage an einem Fahrzeugtyp weist eine Grundplatte auf, die zur starren Befestigung an dem Fahrzeugboden vorgesehen ist. An der Grundplatte ist ein Haltebügel gelagert, der als Verliersicherung dient. Innerhalb des Haltebügels ist eine Federanordnung aus Elastomerwerkstoff ausgebildet, die eine Buchse für ein abzustützendes Befestigungselement elastisch abstützt. Ein solches elastisches Lager ist beispielsweise aus der DE 34 45 491 C1 bekannt. Auf horizontale Verschiebungen zwischen dem Fahrzeugboden und der Abgasanlage reagiert dieses Lager relativ empfindlich. Aus der DE 42 11 397 C1 ist es daher bekannt, den Haltebügel bei einem solchen Lager elastisch auszubilden, um eine Kompensationsmöglichkeit für horizontale Relativverschiebungen zu schaffen. Aus der DE 195 00 192 C1 geht darüberhinaus hervor, den Haltebügel an seinen beiden Enden gelenkig an der Grundplatte zu lagern. Dennoch geht mit jeder horizontalen Verschiebung zwischen der Abgasanlage und dem Fahrzeugboden eine erhebliche Verformung dieser bekannten elastischen Lager einher, die grundsätzlich zu einer Verschlechterung der schalldämmenden Eigenschaften der Lager führt.

Sogenannte elastische Pendellager reagieren auf horizontale Relativverschiebungen zwischen der Abgasanlage und dem Fahrzeugboden weniger empfindlich. Ein elastisches Pendellager der eingangs beschriebenen Art ist aus der DE 30 34 370 C2 bekannt. Dabei besteht das gesamte bekannte elastische Pendellager aus einem einstückigen Formkörper aus Elastomerwerkstoff. Das heißt, der Elastomerwerkstoff bildet sowohl die beiden Schwenklagerbuchsen als auch die Verliersicherung als auch die Federanordnung zur Abstützung der Schwenklagerbuchse für das abzustützende Befestigungselement aus. Konkret ist die Schwenklagerbuchse für das abstützende Befestigungselement am oberen Ende des Pendellagers vorgesehen. Von dieser Schwenklagerbuchse erstreckt sich beidseitig nach unten die schlaufenförmige Verliersicherung und mittig nach unten die hier bandförmige Federanordnung, an deren freien unteren Ende die Schwenklagerbuchse für das abzustützende Befestigungselement innerhalb der Verliersicherung ausgebildet ist. Mit jeder vertikalen Belastung wird die Federanordnung auf Zug beansprucht, was der Lebensdauer des bekannten elastischen Pendellagers grundsätzlich abträglich ist. Ab einer gewissen vertikalen Belastung liegt die Schwenklagerbuchse für das abzustützende Befestigungselement auch an der Verliersicherung an. Hierdurch nimmt die Weichheit der Abstützung ab wodurch die schalldämmende Wirkung des elastischen Pendellagers reduziert wird. Die Verliersicherung selbst hat zwar auch noch einen schalldämmenden Effekt. Ihre Eignung als echte Verliersicherung ist aber nur begrenzt, da sie aus Elastomerwerkstoff besteht und deshalb insbesondere aufgrund thermischer Beanspruchung immer einer gewissen Alterung unterliegt. Hinzu kommt, daß das bekannte elastische Pendellager einen hohen und kostspieligen Materialaufwand erfordert. Bei großer thermischer Beanspruchung kommt nur Silikonkautschuk als Elastomerwerkstoff für die Federanordnung und alle anderen Teile des Pendellagers in Frage, da nur Silikonkautschuk im höheren Temperaturbereich eine ausreichende Stabilität aufweist. Gleichzeitig ist Silikonkautschuk sehr kostspielig. Das bekannte elastische Pendellager ist daher insgesamt teuer, weist durch die Zugbeanspruchung der Federanordnung eine geringe Lebensdauer auf und genügt hohen Sicherheitsanforderungen nicht, da auch die Verliersicherung nur aus Elastomerwerkstoff besteht.

Aus der DE 31 04 709 A1 ist eine ringförmige Elastomerschlaufe für eine Aufhängung bekannt, die in einen Elastomerring eingebettet eine schlaufenförmige Feder aus Federstahlband aufweist. Die schlaufenförmige Feder aus Federstahlband kann dabei als Verliersicherung angesehen werden. Sie beeinträchtigt aber ganz erheblich die schalldämmenden Eigenschaften bei Verwendung der Elastomerschlaufe zur Aufhängung einer Abgasanlage an einem Fahrzeugboden. Auch in dem Bereich, in dem die Feder aus dem Federstahlband eine Vergrößerung des Abstands von zwei Auflagern für ein abstützendes Befestigungselement einerseits und ein abzustützendes Befestigungselement andererseits erlaubt, geht ihre Steifigkeit bereits in die Gesamtsteifigkeit der Elastomerschlaufe ein. Darüberhinaus sind die Auflager für die beiden Befestigungselemente nicht so ausgebildet, daß sie ein leichtes Pendeln der Elastomerschlaufe um diese Auflager zulassen würden. Das bedeutet, daß jede Relativverschiebung zwischen der Abgasanlage und dem Fahrzeugboden zu einer Verformung oder doch zumindest zu einer starken Beanspruchung der Elastomerschlaufe folgt.

Aus der DE 26 58 358 B2 ist eine schallisolierende Aufhängung für eine Abgasleitung bekannt, die eine rombusförmige Grundform aufweist. Der Umfang des Rombus wird von Elastomerwerkstoff ausgebildet, in den ein schlaufenförmiges Federstahlband eingebettet ist. Auch dieses Federstahlband kann als Verliersicherung angesehen werden. Es beeinträchtigt aber wiederum die schalldämmenden Eigenschaften der schallisolierenden Aufhängung. Bei der bekannten schallisolierenden Aufhängung sind Lager für ein abzustützendes Befestigungselement einerseits und ein abgestütztes Befestigungselement andererseits in der oberen und unteren Spitze des Rombus innerhalb des Federstahlband vorgesehen. Es handelt sich aber auch hier um keine Schwenklager mit rotationssymmetrischer Symmetrie, so daß auch die bekannte schallisolierende Aufhängung bei horizontalen Relativverschiebungen zwischen der Abgasanlage und dem Fahrzeugboden erheblich auf eine Formveränderung beansprucht wird.

Aus der DE 40 26 497 Cl ist eine Aufhängevorrichtung für eine Abgasanlage eines Fahrzeugs bekannt, die einen Grundkörper aus Elastomerwerkstoff aufweist. Über eine erste Aufnehmung ist der Grundkörper an einen karosserieseitigen Haken aufhängbar, an dem er sich über eine horizontal ausgedehnte Stützfläche abstützt. Weiterhin weist der Grundkörper eine Aussparung für ein abzustützendes Befestigungselement der Abgasanlage auf, wobei der freie Querschnitt dieser Aussparung größer ist als der Querschnitt des eingreifenden Befestigungselement. So hat das angreifende Befestigungselement senkrecht nach oben und seitlich nach oben Spiel in der Aussparung. Umgeben ist der Grundkörper von einer Schlaufe aus Federstahlband, die oben an dem Grundkörper befestigt ist, beispielsweise durch Anvulkanisieren. Die Schlaufe aus Federstahlband bildet eine Verliersicherung aus. Diese bekannte Aufhängevorrichtung erfordert den Einsatz einer großen Menge von Elastomerwerkstoff. Es handelt sich bei ihr um kein Pendellager, da im Einsatz keine Schwenkbewegungen um die Durchbrechung für das karosserieseitige, abstützende Befestigungselement vorgesehen sind und durch die flächige Abstützung des Grundkörpers an dem dieses Befestigungselement ausbildenden Haken verhindert werden. Möglich sind nur seitliche Verschiebungen des abzustützenden Befestigungselements entweder innerhalb der größer dimensionierten Durchbrechung in dem Grundkörper oder unter asymmetrischer Deformation des Grundkörpers. Die Schlaufe aus Metallband ist durch diese asymmetrischen Deformationen gegebenenfalls nicht betroffen, da sie bis auf ihren mit dem Grundkörper vorbundenen oberen Bereich mit Abstand zu dem Grundkörper verläuft.

Aus der EP 0 908 345 A2 ist eine Aufhängung für eine Abgasanlage eines Kraftfahrzeugs bekannt, deren Funktionselemente innerhalb eines geschlossenen Rohrabschnitts angeordnet sind. Im oberen Bereich des freien Querschnitts des Rohrabschnitts ist eine Schwenklagerbuchse zur Aufnahme eines abstützenden Befestigungselements ausgebildet, so daß das abstützende Befestigungselement zunächst den Rohrabschnitt abstützt. An dem Rohrabschnitt stützt sich dann ein Federkörper aus Elastomerwerkstoff ab, der mit Abstand unterhalb der ersten Schwenklagerbuchse eine Buchse für ein abzustützendes Befestigungselement aufweist. Die Buchse soll drehfest mit dem abzustützenden Befestigungselement verbunden werden. Diese bekannte Aufhängung ist insofern ein Pendellager, als daß sie um das Schwenklager für das abstützende Befestigungselement verschwenkbar ist. Dabei erfolgt jedoch eine Deformation der Federanordnung aus Elastomerwerkstoff, da sich das abzustützende Befestigungselement nicht relativ zu seiner Buchse verdrehen kann. Hierdurch sollen zwar günstige Eigenschaften bei der akustischen Entkopplung der Abgasanlage und der Karosserie des Kraftfahrzeugs erreicht werden. Durch die Deformation der Federanordnung aus Elastomerwerkstoff tritt aber eine erhebliche Belastung des Elastomerwerkstoffs im statischen Bereich auf, die durch dynamische Beanspruchungen noch überlagert wird.

Der Erfindung liegt die Aufgabe zugrunde, ein elastisches Pendellager aufzuzeigen, das neben hoher Verliersicherheit für die Abgasanlage und sehr guten schalldämmenden Eigenschaften eine definierte Lage des gesamten Pendellagers gegenüber dem abstützenden Befestigungselement aufweist und dennoch preiswert herstellbar ist.

Erfindungsgemäß wird diese Aufgabe durch die Merkmale des Anspruchs 1 gelöst.

Die Ausbildung der Verliersicherung aus dem Federstahlband reduziert die Menge des einzusetzenden Elastomerwerkstoffs ganz erheblich. Das Federstahlband ist auch seinerseits elastisch.

Durch die dauerhafte Verbindung der Federanordnung aus Elastomerwerkstoff mit dem Federstahlband, insbesondere durch eine Elastomer-Metall-Verbindung aber auch durch mechanische Maßnahmen wie beispielsweise durch Formschluß, ist das Federstahlband aber dennoch voll in den Aufbau der Elastomerteile des Pendellagers integrierbar. So kann weiterer Elastomerwerkstoff eingespart werden, wenn das Federstahlband beispielsweise genutzt wird, um einen vertikalen Höhenunterschied zwischen den Schwenklagerbuchsen auszugleichen. Die Federanordnung aus Elastomerwerkstoff wird in der geeigneten Höhe beispielsweise an das Federstahlband angespritzt und anvulkanisiert und so dauerhaft mit diesem verbunden. Hierdurch mag sich eine Reihenschaltung des Federstahlbands mit der Federanordnung aus Elastomerwerkstoff ergeben. Diese beeinträchtigt die schwingungsdämmenden Eigenschaften des Pendellagers im Gegensatz zu der bekannten Parallelschaltung aus dem Stand der Technik jedoch nicht. Die Schwingungen der Abgasanlage laufen bei ihrer Übertragung zwischen den beiden Schwenklagerbuchsen sämtlich über die weiche Federanordnung aus Elastomerwerkstoff, wobei sich die schwingungsisolierende Funktion der Federanordnung voll bemerkbar macht. Die Verliersicherung aus dem Federstahlband schafft gleichzeitig auch eine erhöhte Sicherheit vor dem Herabfallen der Abgasanlage bei Beschädigungen des Pendellagers. Das Federstahlband ist im hier relevanten Bereich absolut temperaturstabil.

Bei dem neuen Pendellager ist es möglich, die beiden Enden des Federstahlbands miteinander zu verschweißen oder anderweitig fest miteinander zu verbinden. Vorzugsweise sind die beiden Enden des Federstahlbands eingerollt und greifen zur Ausbildung eines Rings ineinander. Dabei können die beiden Enden gegenläufige Drehrichtungen um die Mittelachse des Rings aufweisen, wenn sie einander komplementäre Ausnehmungen aufweisen.

Die dauerhafte Verbindung der beiden Enden des Federstahlbands im Bereich des Rings kann dann dadurch erfolgen, daß der Ring die Schwenklagerbuchse für das abstützende Befestigungselement begrenzt. Die Schwenklagerbuchse und das dahinein eingebrachte abstützende Befestigungselement verhindern, daß sich die beiden Enden des Federstahlbands auseinander bewegen. Gleichzeitig ergibt sich eine besonders definierte Lage für die Schwenklagerbuchse in dem Ring und damit auch für das gesamte Pendellager gegenüber dem abstützenden Befestigungselement. Konkret wird im Vergleich zum Stand der Technik erhebliche Seitenstabilität für das Pendellager senkrecht zu seiner Haupterstreckungsebene gewonnen.

Bei den ineinander greifenden Enden des Federstahlbands ist es nicht erforderlich, daß diese starr, d. h. beispielsweise durch eine Verschweißung, miteinander verbunden werden. Es ist aber durchaus sinnvoll, die Schwenklagerbuchse für das abstützende Befestigungselement aus Elastomerwerkstoff innerhalb des Rings auszubilden, der an das Federstahlband angespritzt ist. Der an beide Enden des Federstahlbands angespritzte Elastomerwerkstoff sorgt dann für eine indirekte Verbindung der beiden Enden, die letztlich durch das in die Schwenklagerbuchse eingebrachte abstützende Befestigungselement stabilisiert wird.

Der Ring aus den beiden Enden des Federstahlbands kann sowohl außerhalb als auch innerhalb der eigentlichen Verliersicherung angeordnet sein. Bevorzugt ist eine Anordnung innerhalb der Verliersicherung, weil sich hierdurch besonders kompakte Abmessungen ergeben und die von den abstützenden Befestigungselementen aufgenommene Gewichtskraft der Abgasanlage den Ring nicht Richtung auf seine Öffnung beansprucht.

Wenn das Federstahlband nicht selbst korrosionsbeständig ist, sollte es einen Korrosionsschutzüberzug aufweisen. Dieser kann durch vollständiges Umspritzen des Federstahlbands mit dem Elastomerwerkstoff gleichzeitig mit der Ausbildung der Federanordnung bzw. der Schwenklagerbuchsen aufgebracht werden.

Die Herstellung der Verliersicherung aus dem Federstahlband erfordert ein Ausstanzen und Einrollen der Enden, falls diese zu einem Ring zusammengefügt werden sollen. Weiterhin ist das Federstahlband in die Schlaufenform der Verliersicherung zu bringen. Dies ist mit geringstem Aufwand möglich, wenn der Umfang der Verliersicherung mehreckig, beispielsweise vier- oder fünfeckig ist, wobei das Federstahlband in den Ecken umgeknickt oder umgebogen ist. Zwischen den Ecken verläuft das Federstahlband hingegen wie in seiner Ursprungsform gerade.

Die Federanordnung aus Elastomerwerkstoff weist vorzugsweise Federarme auf, die sich quer zu einer durch beide Schwenklagerbuchsen verlaufenden Federrichtung zwischen der Schwenklagerbuchse für das abstützende Befestigungselement und dem Federstahlband erstrecken. Derartige Federarme werden im wesentlichen auf Druck/Schub und weniger auf Zug beansprucht, was sich günstig auf ihre Lebensdauer auswirkt. Zudem sind die Federarme in Querrichtung relativ steif, so daß das wunschgemäße Verschwenken des Pendellagers um die Schwenklagerbuchse für das abzustützende Befestigungselement bei horizontalen Verschiebungen der Abgasanlage unterstützt wird.

Die Erfindung wird im folgenden anhand von Ausführungsbeispielen näher erläutert und beschrieben. Dabei zeigt:
- Figur 1: eine Draufsicht auf des elastischen Pendellagers in einer ersten Ausführungsform,
- Figur 2: eine Abwandlung des Pendellagers gemäß Figur 1 mit einer anderen Federanordnung aus Elastomerwerkstoff,
- Figur 3: eine weitere Ausführungsform des elastischen Pendellagers in einer Draufsicht,
- Figur 4: das Pendellager gemäß Figur 3 in einer Ansicht von oben,
- Figur 5: die Grundform des Federstahlbands bei dem Pendellager gemäß den Figuren 3 und 4 in einer Draufsicht,
- Figur 6: eine weitere Ausführungsform des elastischen Pendellagers in einer Draufsicht,
- Figur 7: die Grundform des Federstahlbands bei dem Pendellager gemäß Figur 6 in einer Draufsicht und
- Figur 8: die Grundform des Federstahlbands gemäß Figur 7 in einer Seitenansicht.

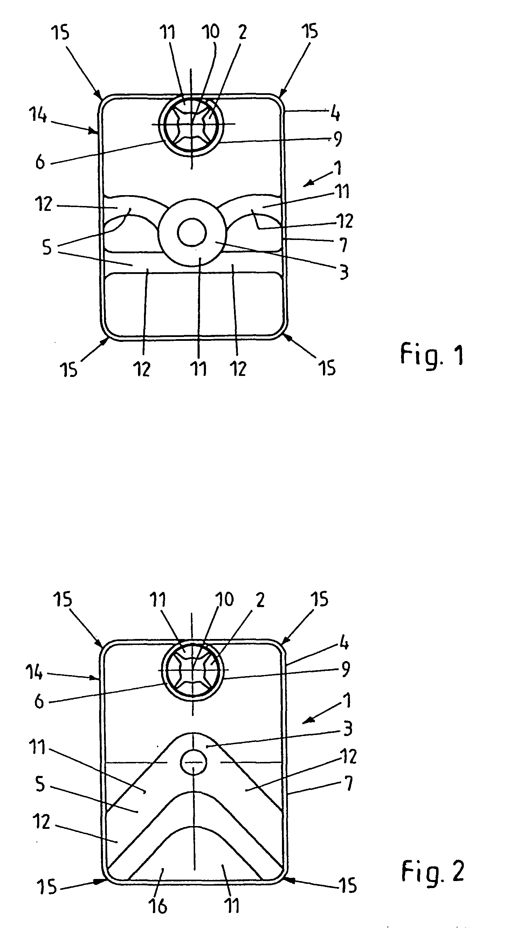

Das in Figur 1 dargestellte Pendellager 1 weist eine erste Schwenklagerbuchse 2 für ein abstützendes Befestigungselement und eine zweite Schwenklagerbuchse 3 für ein abzustützendes Befestigungselement auf. Weiterhin ist eine schlaufenförmige Verliersicherung 4 vorgesehen, innerhalb derer eine Federanordnung 5 angeordnet ist, die die mit Abstand zum unteren Rand der Verliersicherung 4 angeordnete Schwenklagerbuchse 3 elastisch abstützt. Die elastische Abstützung durch die Federanordnung 5 erfolgt gegenüber der Verliersicherung 4 und damit indirekt gegenüber der die Verliersicherung 4 an ihrem oberen Rand abstützenden Schwenklagerbuchse 2. Die Verliersicherung 4 einschließlich eines die Schwenklagerbuchse 2 umgebenden Rings 6 wird von einem Federstahlband 7 ausgebildet, das seinerseits elastisch ist und relative Verschiebungen der abzustützenden und der abstützenden Schwenklagerbuchse 3 und 2 aufnehmen kann, insbesondere, wenn der Federweg der Federanordnung 5 bereits ausgeschöpft ist. Die freien Enden 8 und 9 des Federstahlbands 7 greifen unter Ausbildung des Rings 6 ineinander ein. Dabei sind in den freien Enden 8 und 9 des Federstahlbands 7 Ausnehmungen derart vorgesehen, daß der Ring 6 durchgängig eine einlagige Wandung aufweist. Die Drehrichtung der freien Enden um die Achse 10 des Rings 6 bzw. der darin angeordneten Schwenklagerbuchse 2 ist gegenläufig, so daß der Ring trotz fehlender mechanischer Verbindung der freien Enden 8 und 9 geschlossen ist. Durch die Anordnung der Schwenklagerbuchse 2 in dem Ring 6 ist eine Trennung der freien Enden 8 und 9 des Federstahlbands 7 zuverlässig verhindert. Der Ring 6 befindet sich hier innerhalb der Verliersicherung 4, wobei bei einer Belastung des Pendellagers 1 nach unten keine nennenswerten Öffnungskräfte zwischen den freien Enden 8 und 9 wirken. Die Schwenklagerbuchse 2 kann in den Ring 6 eingepreßt sein. Hier besteht sie aus Elastomerwerkstoff 11 und ist an das Federstahlband 7 unter Ausbildung einer Gummi-Metall-Verbindung angespritzt. Dadurch wird eine besonders dauerhafte Verbindung der freien Enden 8 und 9 und der Schwenklagerbuchse 2 erreicht. Zudem ist die Schwenklagerbuchse 2 aus Elastomerwerkstoff 11 besonders montagefreundlich. Die Federanordnung 5 besteht vorzugsweise aus demselben Elastomerwerkstoff 11 wie die Schwenklagerbuchse 2, der einstückig auch die Schwenklagerbuchse 3 ausbildet. Die Federanordnung 5 weist hier vier Federarme 12 auf, die sich seitlich zwischen der Schwenklagerbuchse 3 und dem Federstahlband 7 erstrecken, d. h. quer zu der von den beiden Schwenklagerbuchsen 2 und 3 definierten vertikalen Federrichtung des Pendellagers 1. Der Elastomerwerkstoff 11 der Federanordnung 5 ist an das Federstahlband 7 angespritzt, d. h. mit der Elastizität der Verliersicherung 4 teilweise in Reihe geschaltet. Auch zwischen der Federanordnung 5 und dem Federstahlband 7 liegt eine Gummi-Metall-Verbindung vor. Die Federarme 12 werden bei dieser Anordnung im wesentlichen auf Druck/Schub und weniger auf Zug beansprucht, was ihre Lebensdauer erhöht. Zudem sind sie in Querrichtung relativ steif, wodurch das gewollte Verschwenken des Pendellagers 1 um die Achse 10 unterstützt wird. Der Umfang 14 der Verliersicherung 4 ist hier rechteckig, wobei das Federstahlband 7 in den Ecken 15 umgebogen ist und zwischen den Ecken 15 gradlinig verläuft. Die Verformung eines zunächst ebenen Federstahlbands in die Verliersicherung 4 mit diesem Umfang 14 ist mit vergleichsweise geringem Aufwand verbunden. Zum Korrosionsschutz kann das gesamte Federstahlband 7 mit Elastomerwerkstoff 11 überzogen sein. Es ist aber auch möglich, das Federstahlband 11 aus einem korrosionsbeständigen Material auszubilden. Der Elastomerwerkstoff 11 ist vorzugsweise ein Silikonkautschuk, der den hohen, im Bereich der Lagerung einer Abgasanlage an einem Fahrzeugboden auftretenden Temperaturen widersteht.

Die in den Figur 2 dargestellte Abwandlungen des Pendellagers 1 gemäß Figur 1 betrifft die Ausbildung der Federanordnung 5. Die Federanordnung 5 besteht hier wieder aus Elastomerwerkstoff 11, der gleichzeitig auch die Schwenklagerbuchse 3 ausbildet. Es sind zwei kräftige, schräg nach unten gerichtete Federarme 12 zwischen der Schwenklagerbuchse 3 und der Verliersicherung 4 aus dem Federstahlband 7 vorgesehen. Zusätzlich ist für die Schwenklagerbuchse 3 ein unterer Anschlagpuffer 16 aus Elastomerwerkstoff 11 ausgebildet. Auch der untere Anschlagpuffer 16 ist direkt an das Federstahlband 7 angespritzt. Auch bei der Ausführungsform des Pendellagers 1 gemäß Figur 1 könnten ein oder mehrere zusätzliche Anschlagpuffer für die Schwenklagerbuchse 3 vorgesehen werden.

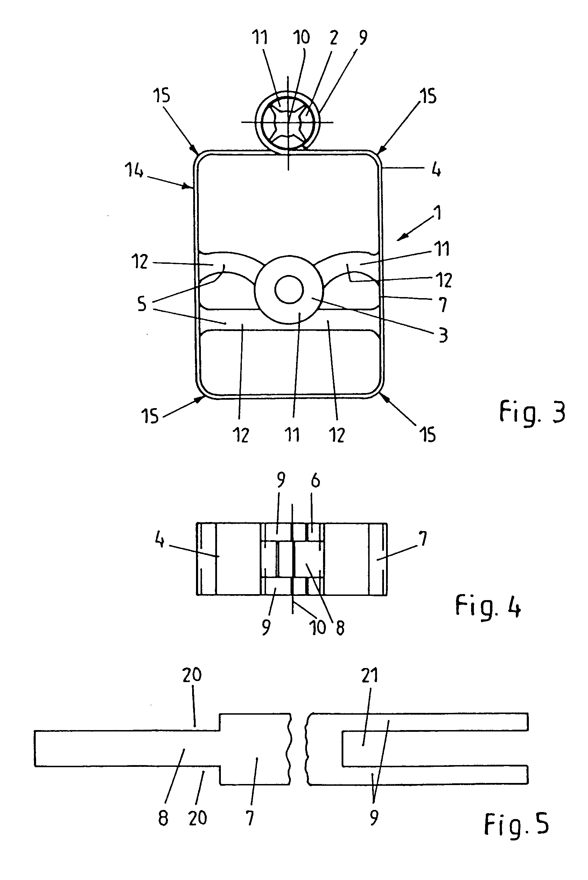

Dies gilt auch für die Ausführungsform des Pendellagers 1 gemäß Figur 3, die sich von derjenigen gemäß Figur 1 darin unterscheidet, daß der Ring 6 nicht innerhalb der Verliersicherung 4 sondern gerade außerhalb der Verliersicherung 4 an deren oberen Rand vorgesehen ist. So wird aus der Draufsicht auf das Pendellager 1 gemäß Figur 4 auch das Ineinandergreifen der Enden des Federstahlbands 7 besonders deutlich. Figur 5 zeigt das Federstahlband 7 ergänzend in seiner ebenen Grundform wobei die Ausnehmungen 20 und 21 in den Enden 8 und 9 des Federstahlbands besonders gut zu erkennen sind. Die Ausnehmungen 20 und 21 sind komplementär zueinander, so daß die Enden 8 und 9 des Federstahlbands 7 den Ring 6 umlaufend einlagig ausbilden.

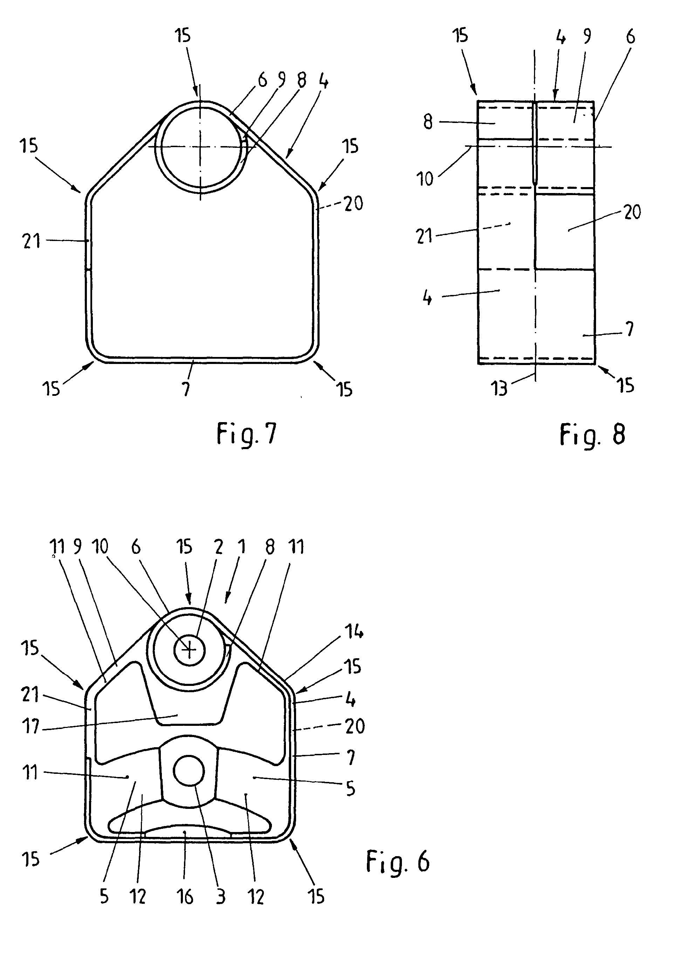

Ein Anschlagpuffer 16 und ein weiterer, oberhalb der Schwenklagerbuchse 3 für das abzustützende Befestigungselement angeordnete weiterer Anschlagpuffer 17 sind bei der Ausführungsform des elastischen Schwenklagers 1 vorgesehen, die in Figur 6 wiedergegeben ist. Hier weist die Federanordnung wie bei der Ausführungsform gemäß Figur 2 wieder zwei massive Federarme auf. Allerdings ist die Ausrichtung der Federarme gemäß Figur 6 so, daß sie sich im wesentlichen quer zu einer durch beide Schwenklagerbuchsen 2 und 3 verlaufenden Federrichtung erstrecken. Bezüglich der aus dem Federstahlband 7 ausgebildeten Verliersicherung 4 ist anzumerken, daß diese hier fünf Ecken 15 hat und damit etwa hausförmig ist. Unterhalb der oberen mittleren Ecke 15 ist innerhalb der Verliersicherung der Ring 6 ausgebildet, der die Schwenklagerbuchse 2 aufnimmt. Dabei verbleibt innerhalb der Verliersicherung 4 ein etwa rechteckiger Freiraum zur Aufnahme der Federanordnung 5 und der Anschlagpuffer 16 und 17. Die Ausnehmungen 20 und 21 in den Enden 8 und 9 erstrecken sich bei dem Schwenklager 1 nicht nur über den Bereich des Rings 6, sondern über den gesamten oberen Bereich des Schwenklagers einschließlich aller drei oberen Ecken 15. Hierdurch wird die Elastizität der Verliersicherung 14 gegenüber einer Abstandsänderung der Schwenklagerbuchsen 2 und 3 erhöht, weil der Querschnitt des Federstahlbands 7 auch im Bereich der oberen äußeren Ecken 15 deutlich geschwächt ist. Die Verliersicherung 4 ist damit insbesondere bei Extrembelastungen des elastischen Lagers 1 in der Lage, relative Abstandsänderungen zwischen dem abzustützenden und dem abstützenden Befestigungselement aufzunehmen, ohne daß es zu einer Beschädigung des elastischen Lagers 1 kommt. Gleichzeitig sorgt die Reihenschaltung der Federanordnung 5 und der Elastitzität der Verliersicherung 4 aber dafür, daß alle Schwingungen über die Federanordnung 5 hinweg laufen und damit nicht nur der Schwingungsdämmung durch die Gesamtelastizität des elastischen Lagers 1 sondern auch der Schwingungsdämpfung durch die Federanordnung 5 aus Elastomerwerkstoff 11 unterworfen sind.

Die Figuren 7 und 8 zeigen zur Verdeutlichung des inneren Aufbaus des elastischen Schwenklagers 1 gemäß Figur 6, bei dem das Federstahlband zumindest teilweise mit Elastomerwerkstoff 11 überzogen ist, die Verliersicherung 4 ohne die weiteren Elemente des elastischen Lagers. Dabei wird deutlich, daß die beiden Enden 8 und 9 bei der Ausführungsform des elastischen Lagers gemäß Figur 6, anders als bei der Ausführungsform gemäß Figur 5 symmetrisch zur Mittelebene 13 der Verliersicherung 4 ausgebildet sind.

### BEZUGSZEICHENLISTE

- 1 -: Pendellager
- 2 -: Schwenklagerbuchse
- 3 -: Schwenklagerbuchse
- 4 -: Verliersicherung
- 5 -: Federanordnung
- 6 -: Ring
- 7 -: Federstahlband
- 8 -: Ende
- 9 -: Ende
- 10 -: Achse

- 11 -: Elastomerwerkstoff
- 12 -: Federarm
- 13 -: Mittelebene
- 14 -: Umfang
- 15 -: Ecke
- 16 -: Anschlagpuffer
- 17 -: Anschlagpuffer
- 20 -: Ausnehmung
- 21 -: Ausnehmung

## Patentansprüche

1. Elastisches Pendellager (1), insbesondere zur Aufhängung einer Abgasanlage an einem Fahrzeugboden,
- mit einer Schwenklagerbuchse (2) für ein abstützendes Befestigungselement sowie
- einer Schwenklagerbuchse (3) für ein abzustützendes Befestigungselement und
- mit einer schlaufenförmigen Verliersicherung (4), die aus einem elastischen Federstahlband (7) ausgebildet ist,
- wobei die Schwenklagerbuchse (2) für das abstützende Befestigungselement am oberen Rand der Verliersicherung (4) angeordnet ist,
- wobei die Schwenklagerbuchse (3) für das abzustützende Befestigungselement innerhalb der Verliersicherung (4) und mit Abstand zu deren unteren Rand angeordnet ist und von einer Federanordnung (5) aus Elastomerwerkstoff (11) abgestützt wird,
- wobei die Federanordnung (5) aus Elastomerwerkstoff (11) dauerhaft mit dem Federstahlband (7) verbunden ist.

2. Pendellager nach Anspruch 1, **dadurch gekennzeichnet,** daß das Federstahlband (7) an dem oberen Rand der Verliersicherung (4) einen Ring (6) ausbildet, der die Schwenklagerbuchse (2) für das abstützende Befestigungselement umschließt.

3. Pendellager nach Anspruch 2, **dadurch gekennzeichnet,** daß die beiden Enden (8 und 9) des Federstahlbands (7) zur Ausbildung des Rings (6) ineinander greifen.

4. Pendellager nach Anspruch 3, **dadurch gekennzeichnet,** daß die beiden Enden (8 und 9) des Federstahlbands (7) einander komplementäre Ausnehmungen (20 und 21) aufweisen.

5. Pendellager nach einem der Ansprüche 2 bis 4, **dadurch gekennzeichnet,** daß die Schwenklagerbuchse (2) für das abstützende Befestigungselement innerhalb des Rings (6) aus Elastomerwerkstoff (11) ausgebildet ist.

6. Pendellager nach Anspruch 5, **dadurch gekennzeichnet,** daß der Elastomerwerkstoff (11), der die Schwenklagerbuchse (2) für das abstützende Befestigungselement ausbildet, dauerhaft mit dem Federstahlband (7) verbunden ist.

7. Pendellager nach einem der Ansprüche 2 bis 6, **dadurch gekennzeichnet,** daß der Ring (6) innerhalb der Verliersicherung (4) angeordnet ist.

8. Pendellager nach einem der Ansprüche 1 bis 7, **dadurch gekennzeichnet,** daß das Federstahlband (7) selbst korrosionsbeständig ist oder einen Korrosionsschutzüberzug, insbesondere aus dem Elastomerwerkstoff (11), aufweist.

9. Pendellager nach einem der Ansprüche 1 bis 8, **dadurch gekennzeichnet,** daß die Verliersicherung (4) einen mehreckigen Umfang (14) aufweist, wobei das Federstahlband (7) in den Ecken (15) umgeknickt oder umgebogen ist.

10. Pendellager nach einem der Ansprüche 1 bis 9, **dadurch gekennzeichnet,** daß die Federanordnung (5) aus Elastomerwerkstoff (11) Federarme (12) aufweist, die sich im wesentlichen quer zu einer durch beide Schwenklagerbuchsen (2 und 3) verlaufenden Federrichtung, zwischen der Schwenklagerbuchse (3) für das abzustützende Befestigungselement und dem Federstahlband (7) erstrecken.
